# FASCICULE DE BREVET EUROPEEN

(11) **EP 2 978 985 B1**
(45) Date de publication et mention de la délivrance du brevet: **22.02.2017**
(21) Numéro de dépôt: 14718671.2
(22) Date de dépôt: 25.03.2014
(51) Int. Cl.: F16C 33/60, F16C 25/08, F16C 19/16, F16C 19/52

(54) **BUTÉE AXIALE DÉBRAYABLE A PRÉCHARGE INTERNE**
ENTKOPPELBARES AXIALSCHUBLAGER MIT INTERNER VORSPANNUNG
DISENGAGEABLE AXIAL THRUST BEARING WITH INTERNAL PRELOAD

(30) Priorité: 28.03.2013 FR 1352806
(43) Date de publication de la demande: 03.02.2016
(73) Titulaire: SNECMA, 75015 Paris (FR)
(72) Inventeur: BOUFFLERT, Sébastien, F-27400 Louviers (FR); BOURDIN, Philippe, F-27950 Saint-Just (FR); LEMAITRE, Alban, F-27200 Vernon (FR); TESSIER, Fabien, F-27200 Vernon (FR)
(74) Mandataire: David, Alain
(86) Numéro de dépôt international: PCT/FR2014/050699
(87) Numéro de publication internationale: WO 2014/154999

(56) Documents cités:
- WO-A1-2010/106264
- DE-A1-102009 036 303
- FR-A1- 2 932 530
- JP-A- 2000 320 550
- JP-A- 2005 201 334

## Description

### Domaine de l'invention

La présente invention a pour objet une butée axiale débrayable pour machine tournante, comprenant une bague intérieure disposée autour d'un arbre tournant de façon non frettée radialement sur ledit arbre, un élément de synchronisation monté sur l'arbre tournant pour assurer l'entraînement en rotation sélective de la bague intérieure, une bague extérieure formée de deux demi-bagues montées à coulissement sur un carter, et des éléments de roulement à contact oblique.

### Art antérieur

Dans le cadre de machines tournantes cryotechniques montées sur des paliers radiaux fluides, dont un des intérêts majeurs est la longue durée de vie, comparativement aux machines sur paliers classiques à billes ou rouleaux qui, du fait de l'impossibilité en ambiance cryogénique d'apporter la lubrification nécessaire, sont confrontées à des problèmes d'usure, la demanderesse a déjà proposé avec sa demande internationale WO2010/106264, des butées axiales débrayables qui sont destinées à reprendre les efforts résiduels axiaux.

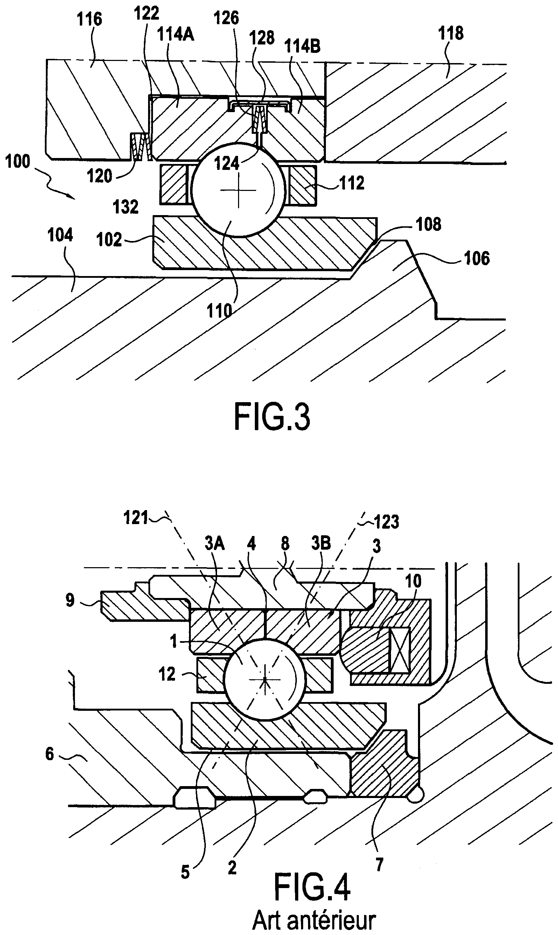

La figure 4 montre un exemple de butée axiale débrayable telle qu'elle résulte de la demande internationale précitée qui est utilisée sur des machines tournantes équipées de paliers radiaux fluides. Sur cette figure, on voit l'un des éléments de roulement à contact oblique 1 constitué par des billes emprisonnées dans une cage 12 et interposées entre une bague intérieure 2 et une bague extérieure 3 formée de deux demi-bagues 3A et 3B que sépare un interstice 4 de valeur nulle au repos.

La bague intérieure 2 est montée avec un jeu 5 sur un arbre principal 6 et peut être entraînée en rotation avec cet arbre grâce à un cône de synchronisation 7. Les demi-bagues extérieures 3A, 3B sont montées par rapport au carter 8 de façon à pouvoir coulisser par rapport à celui-ci et sont en outre enserrées dans le sens axial entre d'une part un organe de butée fixe 9 et d'autre part un système de pré-charge 10 exerçant un effort axial prédéterminé sur le roulement et qui peut comprendre un ressort agissant axialement sur la bague externe 3.

Le roulement à billes à contact oblique ainsi pré-chargé définit une butée axiale débrayable à deux points de contact entre chaque bille 1 et à la fois la bague intérieure 2 et la demi-bague extérieure 3A.

Cette butée axiale débrayable de l'art antérieur présente toutefois certains inconvénients, du fait notamment de la nécessité de parfaitement maîtriser l'interstice 4 qui doit être dimensionné pour accepter une pré-charge minimum au moment du débrayage afin d'assurer une bonne stabilité du système une fois débrayé. Il doit aussi permettre un fonctionnement en 2 points de contact durant les phases où le roulement est entraîné en rotation et soumis à un effort axial. La définition de cet interstice est dès lors particulièrement complexe car elle nécessite de bien maîtriser les chargements internes /externes du roulement et les déformées associées comme la déflexion du roulement sous charge, l'écrasement 1/2 BE sous pré-charge ou encore la prise en compte des effets de centrifugation.

Un autre inconvénient résulte du calibrage du système de pré-charge 10. En effet, il est nécessaire de bien maîtriser la phase transitoire dans laquelle le fonctionnement du roulement bascule de 2 à 4 points de contact et inversement sachant que selon les profils d'effort et de vitesse de rotation, il est même possible de ne pas obtenir de solution permettant de réaliser la transition de 4 à 2 points de contact. Cette transition est rencontrée lorsque l'effort axial du rotor transmis au roulement via le cône de synchronisation est inférieur à un effort seuil. Dans ce cas, l'interstice s'ouvre. Le roulement est toujours entraîné en rotation mais les billes sont soumises à la fois à l'effort du rotor via le cône et à l'effort du système de pré-charge. Le fonctionnement du roulement peut alors devenir temporairement instable (fonctionnement en 3 points de contact, glissement des billes voire perte de contact), ce qui est particulièrement néfaste à sa durée de vie. Cela est en partie lié au fait que l'orientation de l'effort axial lié à la pré-charge est le même que celui lié au rotor. Le système de pré-charge doit alors être défini de manière à limiter au maximum ce fonctionnement instable pendant les phases d'embrayage/débrayage. Cela nécessite de bien estimer l'effort seuil dans laquelle la pré-charge intervient, mais également le fonctionnement du roulement lui-même (raideur, déformation, effets de centrifugation des billes...). Cela nécessite également de bien connaître l'évolution de l'effort axial du rotor en fonction de la vitesse de rotation, ce qui est particulièrement difficile à déterminer lors de phase où la vitesse de rotation de l'arbre évolue rapidement et où la machine tournante est susceptible de fonctionner dans des conditions notablement distinctes de ses conditions nominales.

Encore un autre inconvénient est que la butée axiale de l'art antérieur est particulièrement complexe à fabriquer. Elle nécessite en effet de maîtriser des jeux très faibles, tant au niveau de l'interstice qu'entre la bille et la demi-bague extérieure en phase de fonctionnement en 2 points de contact. Cela conduit à définir des tolérances de fabrication très serrées sur les pistes de la bague extérieure du roulement, rendant en pratique sa fabrication difficile et couteuse.

### Définition et objet de l'invention

La présente invention vise à remédier aux inconvénients précités en proposant une butée axiale débrayable pour machine tournante, comprenant une bague intérieure disposée autour d'un arbre tournant de façon non frettée radialement sur ledit arbre, un élément de synchronisation monté sur ledit arbre tournant pour assurer l'entraînement en rotation sélective de ladite bague intérieure, une bague extérieure comprenant des première et deuxième demi-bagues extérieures centrées sur un carter et enserrées dans le sens axial entre d'une part un organe de butée fixe et d'autre part un premier système de pré-charge exerçant un premier effort axial prédéterminé, et des éléments de roulement à contact oblique, caractérisée en ce qu'elle comporte en outre un second système de pré-charge inséré dans le sens axial entre lesdites première et deuxième demi-bagues extérieures et exerçant un second effort axial prédéterminé inférieur au premier effort axial prédéterminé tel que, tant que la charge axiale exercée sur la butée axiale via l'élément de synchronisation est supérieure à un valeur seuil déterminée, les éléments de roulement présentent chacun une seule ligne de deux points de contact avec d'une part la bague intérieure et d'autre part la première demi-bague extérieure, la seconde demi-bague extérieure étant écartée de la première par le second effort axial prédéterminé exercé par le second système de pré-charge et la bague intérieure est entraînée en rotation par ledit élément de synchronisation, tandis que, lorsque la charge axiale exercée sur la butée axiale devient inférieure à cette valeur seuil déterminée, une deuxième ligne de deux points de contact supplémentaires est créée entre chacun des éléments de roulement et la bague intérieure d'une part et la deuxième demi-bague extérieure d'autre part, de sorte que la butée axiale est débrayée, l'arrêt en rotation de la bague intérieure s'effectuant par inertie et frottements internes à la butée par les quatre points de contact de chaque élément de roulement avec la bague intérieure et les première et deuxième demi-bagues extérieures.

L'adjonction de ce second système de pré-charge permet de faciliter le fonctionnement en deux points de contact lorsque la butée axiale est mise à contribution. En écartant les deux demi-bagues extérieures, ce système permet d'éviter de longs fonctionnements sur trois points de contact qui peuvent dégrader le roulement tout en facilitant la conception du roulement malgré l'ajout d'une nouvelle pièce (fonctionnement plus simple avec une transition 4-2 points de contact mieux maîtrisée par rapport à l'art antérieur).

De préférence, les premier et second systèmes de pré-charge comprennent un ensemble élastique composé avantageusement de une ou plusieurs rondelles ressort.

Avantageusement, le premier système de pré-charge exerce un effort axial dans le sens opposé à la charge axiale exercée sur la butée axiale via l'élément de synchronisation et le second système de pré-charge est maintenu en position par une agrafe annulaire venant se positionner dans une rainure associée de chacune des demi-bagues extérieures.

Dans une variante de réalisation, la demi-bague extérieure assurant la première ligne de points de contact présente une largeur plus grande que l'autre demi-bague extérieure assurant la deuxième ligne de points de contact.

Avantageusement, les éléments de roulement sont des billes et l'organe de butée fixe peut former une partie de carter.

De préférence, la butée axiale comporte un jeu localisé du côté du premier système de pré-charge entre la demi-bague extérieure et le carter qui est non nul tant que la charge axiale exercée sur la butée axiale est inférieure à la valeur seuil déterminée.

La butée axiale débrayable selon l'invention est avantageusement appliquée à une machine tournante cryotechnique et plus particulièrement à une telle machine équipée d'un système d'équilibrage axial actif en régime stabilisé.

### Brève description des dessins

D'autres caractéristiques et avantages de l'invention ressortiront de la description suivante de modes particuliers de réalisation donnés à titre d'exemples en référence aux dessins annexés ; sur lesquels :
- la figure 1 est une vue en demi-coupe axiale d'un premier exemple de butée axiale débrayable selon l'invention,
- la figure 2 est une vue élargie de la figure 1 dans une phase de fonctionnement avec deux points de contact entre un élément de roulement et des bagues interne et externe,
- la figure 3 est une vue en demi-coupe axiale d'un second exemple de butée axiale débrayable selon l'invention, et
- la figure 4 est une vue en demi-coupe axiale d'un exemple de butée axiale débrayable selon l'art antérieur.

### Description détaillée de modes de réalisation préférentiels

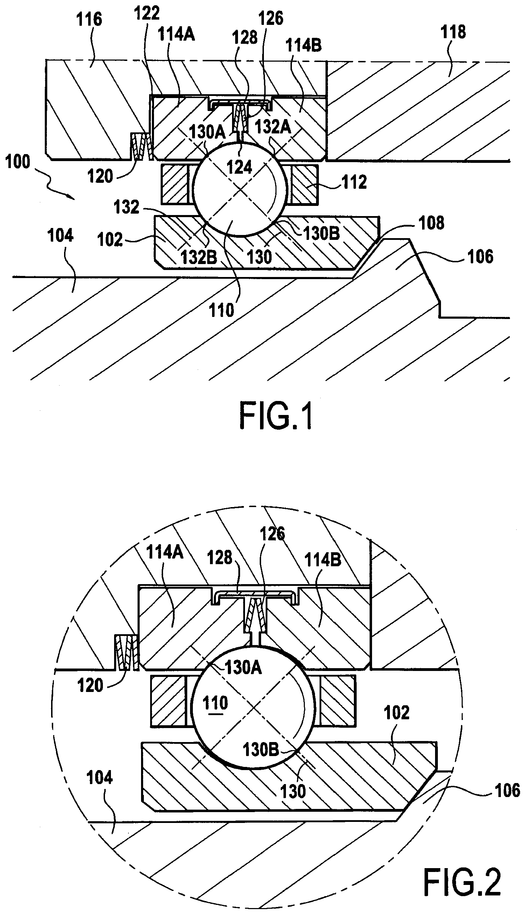

On voit sur la figure 1 un exemple de butée axiale débrayable selon l'invention. Cette butée 100 comprend une bague intérieure 102 montée de façon non frettée radialement sur un arbre central 104 qui peut par exemple être solidaire d'un rouet de machine tournante cryotechnique. L'arbre central est avantageusement monté sur des paliers classiques, de type fluide, à feuilles, magnétique ou autres non représentés sur le dessin et la machine tournante est avantageusement équipée d'un système d'équilibrage axial actif en régime stabilisé.

Des exemples de système d'équilibrage axial actif ont été décrits par exemple dans les documents de brevet FR 2 698 666 et FR 2 698 667.

L'entraînement en rotation de la bague intérieure 102 est assuré par un élément de synchronisation 106 qui, en l'absence de charge axiale, est séparé de cette bague intérieure par un premier jeu 108 de l'ordre de quelques centièmes à plusieurs millimètres.

La butée axiale comprend des éléments de roulement à contact oblique 110, tels que des billes, maintenus dans une cage 112 et disposés entre la bague intérieure 102 et une bague extérieure 114 réalisée en deux parties 114A, 114B centrées sur un carter 116 dans lequel elles peuvent coulisser dans le sens axial dans certaines phases de fonctionnement.

Les demi-bagues extérieures 114A, 114B sont enserrées dans le sens axial entre d'une part une partie de carter ou un organe de butée fixe 118 solidaire du carter 116 et d'autre part un premier système de pré-charge 120 formé par un ensemble élastique, par exemple une ou plusieurs rondelles ressort, exerçant un premier effort axial prédéterminé, par exemple de l'ordre de quelques centaines de newton, tel que, tant que la charge axiale exercée sur la butée axiale via l'élément de synchronisation 106 est nulle ou inférieure à un seuil donné (par exemple également de l'ordre de quelques centaines de newton), qui dépend de la vitesse de rotation, il est créé un second jeu 122 d'une largeur de quelques centièmes à plusieurs millimètres entre la demi-bague extérieure 114A et le carter 116 (localisé du côté du premier système de pré-charge 120), les demi-bagues extérieures 114A, 114B étant elles-mêmes séparées par un interstice 124 de plusieurs millimètres maintenu ouvert par un second système de pré-charge 126 disposé entre les demi-bagues extérieures et formé également par un ensemble élastique, par exemple composé de une ou plusieurs rondelles ressort, exerçant un second effort axial prédéterminé, par exemple de l'ordre de quelques dizaines de newton, inférieur au premier effort axial prédéterminé. Ces rondelles ressort sont avantageusement maintenues en position par une agrafe annulaire 128 venant se positionner dans une rainure associée de chacune des demi-bagues extérieures.

Selon les phases de fonctionnement de la butée axiale qui sera détaillée ci-après, les éléments de roulement 110 peuvent présenter chacun avec les bagues intérieure et extérieure soit une première ligne oblique 130 de deux points de contact 130A, 130B, avec d'une part la bague intérieure 102 et d'autre part la première demi-bague extérieure 114A soit une première ligne oblique 130 avec ces deux premiers points de contact et une seconde ligne oblique 132 avec deux autres points de contact 132A, 132B avec cette fois la demi-bague extérieure 114B et toujours la bague intérieure 102.

Le fonctionnement de la butée axiale débrayable conforme à l'invention qui, selon les phases de son fonctionnement, présente donc deux ou quatre points de contact, est maintenant décrit en détaillant successivement les phases principales, au nombre de quatre.

On considère comme première phase la phase pendant laquelle l'arbre n'exerce pas d'effort sur la butée axiale. Pendant cette phase, le premier jeu 108 est ouvert et du fait que le premier effort axial prédéterminé du premier système de pré-charge 120 est supérieur à celui exercé par le second système de pré-charge 126, le second jeu 122 est lui-aussi ouvert et les demi-bagues extérieures 114A et 114B sont en appui sur la partie fixe de carter 118 et séparés par l'interstice 124. Dans ce cas, les billes du roulement 110 sont en contact oblique avec la bague intérieure 102 et les demi-bagues extérieures 114A et 114B selon les quatre points de contact 130A, 130B, 132A, 132B (figure 1).

La seconde phase est constituée par la phase d'embrayage illustrée à la figure 2. Dans cette phase, le sens de l'effort axial de l'arbre est orienté vers la butée et le premier jeu 108 se referme. Dès que l'élément de synchronisation 106 est en contact avec la bague intérieure 102, le roulement est entraîné en rotation et l'arbre exerce alors un effort axial sur la butée. Tant que cet effort axial est inférieur à une valeur seuil, le second jeu 122 reste ouvert et le roulement fonctionne dans des conditions de transition potentiellement instable (avec 3 points de contact, glissement des billes...). Cette phase de fonctionnement est toutefois minimisée par l'introduction du second système de pré-charge 126 au sein même du roulement qui permet un accroissement de la largeur de l'interstice 124 au contraire de la solution de l'art antérieur. La butée axiale reprend la poussée axiale, sa vitesse évolue et une fois que l'effort axial exercé par l'arbre est supérieur à cette valeur seuil, la demi-bague extérieure 114A coulisse dans le carter 116 et le second jeu 122 se referme. Le second effort axial prédéterminé exercé par le second système de pré-charge 126 élargit alors l'interstice 124 en écartant la demi-bague extérieure 114A (ainsi que les billes qui sont alors libérées des contacts opposés 132A, 132B) de la demi-bague extérieure 114B, cette dernière restant en appui sur sa butée fixe 118 solidaire du carter. La valeur est maximale lorsque le second jeu 122 est nul. Le roulement fonctionne alors sur deux points de contact 130A et 130B. L'intérêt de ce fonctionnement est de minimiser la puissance dissipée aux contacts 130A, 130B et l'usure selon un fonctionnement classique des roulements à billes.

La troisième phase est une phase pendant laquelle l'arbre exerce un effort sur la butée axiale supérieure à la valeur seuil permettant la compression du premier système de pré-charge 120. Tant que l'effort reste supérieur à cette valeur seuil, le second jeu 122 reste donc fermé avec la demi-bague extérieure 114A en appui sur le carter 116. Le roulement fonctionne alors sur deux points de contact. Il est à même de pouvoir supporter des niveaux d'efforts axiaux significatifs. L'autre demi-bague extérieure 114B étant maintenue en appui sur la butée fixe 118, le jeu entre les billes et cette demi-bague extérieure est choisi de manière à ce que cette demi-bague extérieure 114B ne vienne pas perturber le fonctionnement du roulement en deux points de contact. Ce jeu est directement lié au second jeu 122 qu'il est possible de régler au montage.

Enfin, la quatrième phase est constituée par la phase de débrayage dans laquelle l'effort axial exercé par l'arbre sur la butée axiale, toujours orienté vers la butée, chute du fait de l'entrée en fonction d'un système d'équilibrage axial actif jusqu'à s'annuler. Dès que sa valeur devient inférieure à la valeur seuil, le second jeu 122 s'ouvre et la demi-bague extérieure 114A ainsi que les billes coulissent vers l'autre demi-bague extérieure 114B, recréant le contact 132A entre les billes et la demi-bague extérieure 114B. Tant que l'effort axial exercé par l'arbre est non nul, le roulement reste entrainé par l'arbre en rotation et est soumis à la fois à l'effort exercé par l'arbre et à l'effort interne incluant l'effort exercé par le second système de pré-charge 126 conduisant au point de contact 132A. Le roulement fonctionne alors dans des conditions de transition potentiellement instable difficiles à déterminer (avec 3 points de contact, glissement des billes...) et qui, comme explicité précédemment, doivent être minimisées. Dès que l'effort exercé par l'arbre est nul puis négatif, le premier jeu 108 s'ouvre et le point de contact 132B est alors acquis. Le roulement fonctionne sur quatre points de contacts selon les directrices 130-132. Les frottements internes associés à ce fonctionnement sur quatre points de contact conduisent à arrêter la rotation de la bague intérieure du roulement. Cet arrêt de la rotation de la bague intérieure en passant successivement de deux à trois puis quatre points de contact se traduit par un arrêt doux (en fait un freinage progressif) de la bague intérieure 102.

Lors du fonctionnement de la butée axiale avec quatre points de contact 130A, 130B, 132A, 132B, le roulement n'est plus chargé et n'est plus entraîné mécaniquement en rotation (un entraînement par le fluide est toutefois possible), ce qui maintient une parfaite position axiale du roulement.

La figure 3 montre une variante de réalisation de l'invention qui permet une augmentation de la surface d'appui du premier point de contact 130A. En effet, selon l'évolution de la vitesse de rotation et de l'effort de l'arbre à reprendre par le roulement, il est possible de devoir couvrir, en phase de fonctionnement à deux points de contact, une large plage de positionnement du point de contact 130A sur la demi-bague extérieure 114A. Dans ce cas, la non-continuité de forme au niveau de l'interstice 124 entre les deux demi-bagues extérieures peut s'avérer problématique. Aussi, dans cette variante, les deux demi-bagues extérieures 114A et 114B sont choisies non symétriques, la première demi-bague extérieure 114A ayant une largeur plus grande que celle de la seconde demi-bague extérieure 114B, de manière à augmenter la surface d'appui possible pour le point de contact 130A.

Avec l'invention, on s'affranchit de la gestion thermomécanique de l'interstice et des jeux internes de la bague extérieure de la solution de l'art antérieur en introduisant une pré-charge secondaire interne au roulement (rondelle ressort 126 localisée entre les deux demi-bagues extérieures 114A, 114B). Ainsi, lorsque le roulement est soumis à l'effort axial de l'arbre via l'élément de synchronisation 106 et fonctionne sur deux points de contact 130A, 130B, cette pré-charge interne secondaire permet de décaler axialement la demi-bague extérieure 114B inutile au fonctionnement du roulement pendant cette phase. Cette pré-charge secondaire permet également d'augmenter et de mieux maîtriser le jeu entre la bille 110 et cette demi-bague 114B potentiellement gênante pour le fonctionnement du roulement. Il en résulte la possibilité, par rapport à la solution de l'art antérieur, de relâcher les tolérances de fabrication sur les pistes internes des billes des demi-bagues extérieures. De même, lorsque le roulement n'est plus soumis à l'effort axial de l'arbre via l'élément de synchronisation 106, la pré-charge principale permet d'assurer la stabilité du roulement. En effet, pendant cette phase, le fonctionnement sur quatre points de contact et la stabilité sont assurés si la différence entre l'effort axial exercé par la pré-charge principale et l'effort exercé par la pré-charge axiale secondaire est supérieure à un seuil donné. En outre, de par l'écartement mécanique de la demi-bague 114B, la transition entre un fonctionnement du roulement à deux et quatre points de contact est facilitée, ce qui permet d'améliorer la durée de vie du roulement. Enfin, l'effort seuil exercé par l'arbre pour laquelle se produit la transition entre deux et quatre points de contact est mieux maîtrisé: il s'agit en première approximation de la différence entre l'effort axial exercé par la pré-charge principale et l'effort exercé par la pré-charge axiale interne secondaire.

## Revendications

1. Butée axiale débrayable pour machine tournante, comprenant une bague intérieure (102) disposée autour d'un arbre tournant (104) de façon non frettée radialement sur ledit arbre, un élément de synchronisation (106) monté sur ledit arbre tournant pour assurer l'entraînement en rotation sélective de ladite bague intérieure, une bague extérieure comprenant des première (114A) et deuxième (114B) demi-bagues extérieures centrées sur un carter (116) et enserrées dans le sens axial entre d'une part un organe de butée fixe (118) et d'autre part un premier système de pré-charge (120) exerçant un premier effort axial prédéterminé, et des éléments de roulement (110) à contact oblique, **caractérisée en ce qu'**elle comporte en outre un second système de pré-charge (126) inséré dans le sens axial entre lesdites première et deuxième demi-bagues extérieures et exerçant un second effort axial prédéterminé inférieur au premier effort axial prédéterminé tel que, tant que la charge axiale exercée sur la butée axiale via l'élément de synchronisation (106) est supérieure à une valeur seuil déterminée, les éléments de roulement (110) présentent chacun une seule ligne (130) de deux points de contact (130A, 130B) avec d'une part la bague intérieure (102) et d'autre part la première demi-bague extérieure (114A), la seconde demi-bague extérieure (114B) étant écartée de la première par le second effort axial prédéterminé exercé par le second système de pré-charge (126) et la bague intérieure (102) est entraînée en rotation par ledit élément de synchronisation (106), tandis que, lorsque la charge axiale exercée sur la butée axiale devient inférieure à cette valeur seuil déterminée, une deuxième ligne (132) de deux points de contact supplémentaires (132A, 132B) est créée entre chacun des éléments de roulement (110) et la bague intérieure (102) d'une part et la deuxième demi-bague extérieure (114B) d'autre part, de sorte que la butée axiale est débrayée, l'arrêt en rotation de la bague intérieure (102) s'effectuant par inertie et frottements internes à la butée par les quatre points de contact de chaque élément de roulement (110) avec la bague intérieure (102) et les première et deuxième demi-bagues extérieures (114A, 114B).

2. Butée axiale débrayable selon la revendication 1, **caractérisée en ce que** les premier et second systèmes de pré-charge (120, 126) comprennent un ensemble élastique.

3. Butée axiale débrayable selon la revendication 2, **caractérisée en ce que** ledit ensemble élastique comporte une ou plusieurs rondelles ressort.

4. Butée axiale débrayable selon la revendication 1 ou la revendication 2, **caractérisée en ce que** le premier système de pré-charge exerce un effort axial dans le sens opposé à la charge axiale exercée sur la butée axiale via l'élément de synchronisation.

5. Butée axiale débrayable selon l'une quelconque des revendications 1 à 4, **caractérisée en ce que** le second système de pré-charge est maintenu en position par une agrafe annulaire (128) venant se positionner dans une rainure associée de chacune des demi-bagues extérieures.

6. Butée axiale débrayable selon l'une quelconque des revendications 1 à 5, **caractérisée en ce que** la demi-bague extérieure (114A) assurant la première ligne de points de contact (130) présente une largeur plus grande que l'autre demi-bague extérieure (114B) assurant la deuxième ligne (132) de points de contact.

7. Butée axiale débrayable selon l'une quelconque des revendications 1 à 6, **caractérisée en ce que** les éléments de roulement (110) sont des billes.

8. Butée axiale débrayable selon l'une quelconque des revendications 1 à 7, **caractérisée en ce que** l'organe de butée fixe forme une partie de carter.

9. Butée axiale débrayable selon l'une quelconque des revendications 1 à 8, **caractérisée en ce qu'**elle comporte un jeu (122) localisé du côté du premier système de pré-charge entre la demi-bague extérieure (114A) et le carter (116) qui est non nul tant que la charge axiale exercée sur la butée axiale est inférieure à la valeur seuil déterminée.

10. Utilisation d'une butée axiale débrayable selon l'une quelconque des revendications 1 à 9 dans une machine tournante cryotechnique, avantageusement équipée d'un système d'équilibrage axial actif en régime stabilisé.

## Patentansprüche

1. Ausrückbarer Axialanschlag für eine umlaufende Maschine, umfassend einen Innenring (102), der um eine drehbare Welle (104) nicht radial auf die Welle aufgeschrumpft angeordnet ist, ein Synchronisationselement (106), das an der drehbaren Welle angebracht ist, um den selektiven Drehantrieb des Innenrings sicherzustellen, einen Außenring, der einen ersten (114A) und einen zweiten (114B) äußeren Halbring umfasst, die an einem Gehäuse (116) zentriert und in axialer Richtung zwischen einerseits einem festen Anschlagorgan (118) und andererseits einem ersten Vorbelastungssystem (120), welches eine erste vorbestimmte Axialkraft ausübt, eingespannt sind, und Rollelemente (110) mit schrägem Kontakt, **dadurch gekennzeichnet, dass** er ferner ein zweites Vorbelastungssystem (126) umfasst, das in axialer Richtung zwischen dem ersten und dem zweiten äußeren Halbring eingesetzt ist und eine zweite vorbestimmte Axialkraft, welche geringer als die erste vorbestimmte Axialkraft ist, ausübt, derart, dass solange die auf den Axialanschlag über das Synchronisationselement (106) ausgeübte axiale Belastung größer als ein vorbestimmter Schwellwert ist, die Rollelemente (110) jeweils eine einzige Linie (130) von zwei Kontaktpunkten (130A, 130B) mit einerseits dem Innenring (102) und andererseits dem ersten äußeren Halbring (114A) aufweisen, wobei der zweite äußere Halbring (114B) von dem ersten durch die zweite vorbestimmte Axialkraft, welche durch das zweite Vorbelastungssystem (126) ausgeübt wird, entfernt wird, und wird der Innenring (102) durch das Synchronisationselement (106) drehangetrieben, während dann, wenn die auf den Axialanschlag ausgeübte axiale Belastung diesen vorbestimmten Schwellwert unterschreitet, eine zweite Linie (132) von zwei zusätzlichen Kontaktpunkten (132A, 132B) zwischen jedem der Rollelemente (110) und dem Innenring (102) einerseits und dem zweiten äußeren Halbring (114B) andererseits erzeugt wird, so dass der Axialanschlag ausgerückt wird, wobei das Drehanhalten des Innenrings (102) mittels Trägheit und Reibungen innerhalb des Anschlags über die vier Kontaktpunkte eines jeden Rollelements (110) mit dem Innenring (102) und den ersten und zweiten äußeren Halbringen (114A, 114B) erfolgt.

2. Ausrückbarer Axialanschlag nach Anspruch 1, **dadurch gekennzeichnet, dass** das erste und das zweite Vorbelastungssystem (120, 126) eine elastische Anordnung umfassen.

3. Ausrückbarer Axialanschlag nach Anspruch 2, **dadurch gekennzeichnet, dass** die elastische Anordnung einen oder mehrere Federringe umfasst.

4. Ausrückbarer Axialanschlag nach Anspruch 1 oder Anspruch 2, **dadurch gekennzeichnet, dass** das erste Vorbelastungssystem eine Axialkraft in entgegengesetzter Richtung zu der auf den Axialanschlag über das Synchronisationselement ausgeübten axialen Belastung ausübt.

5. Ausrückbarer Axialanschlag nach einem der Ansprüche 1 bis 4, **dadurch gekennzeichnet, dass** das zweite Vorbelastungssystem durch eine ringförmige Klammer (128), die in einer zugeordneten Nut eines jeden der äußeren Halbringe zu liegen kommt, in Position gehalten wird.

6. Ausrückbarer Axialanschlag nach einem der Ansprüche 1 bis 5, **dadurch gekennzeichnet, dass** der äußere Halbring (114A), welcher die erste Kontaktpunktelinie (130) sicherstellt, eine größere Breite als der andere äußere Halbring (114B), welcher die zweite Kontaktpunktelinie (132) sicherstellt, aufweist.

7. Ausrückbarer Axialanschlag nach einem der Ansprüche 1 bis 6, **dadurch gekennzeichnet, dass** die Rollelemente (110) Kugeln sind.

8. Ausrückbarer Axialanschlag nach einem der Ansprüche 1 bis 7, **dadurch gekennzeichnet, dass** das feste Anschlagorgan einen Gehäuseteil bildet.

9. Ausrückbarer Axialanschlag nach einem der Ansprüche 1 bis 8, **dadurch gekennzeichnet, dass** er ein auf der Seite des ersten Vorbelastungssystems zwischen dem äußeren Halbring (114A) und dem Gehäuse (116) befindliches Spiel (122) aufweist, das nicht null ist, solange die auf den Axialanschlag ausgeübte axiale Belastung geringer als der vorbestimmte Schwellwert ist.

10. Verwendung eines ausrückbaren Axialanschlags nach einem der Ansprüche 1 bis 9, in einer kryotechnischen umlaufenden Maschine, die vorteilhafterweise mit einem aktiven axialen Ausgleichssystem im stabilisierten Betrieb ausgestattet ist.

## Claims

1. A disengageable axial thrust bearing for a rotary machine, the thrust bearing comprising an inner ring (102) arranged around a rotary shaft (104) in radially non-interfering manner on said shaft, a synchronization element (106) mounted on said rotary shaft to drive rotation of said inner ring selectively, an outer ring comprising first and second outer half-rings (114A, 114B) centered in a casing (116) and clamped in the axial direction between firstly a stationary thrust member (118) and secondly a first pre-loading system (120) exerting a first predetermined axial force, and oblique-contact rolling elements (110), the thrust bearing being **characterized in that** it further comprises a second pre-loading system (126) inserted in the axial direction between said first and second outer half-rings and exerting a second predetermined axial force less than the first predetermined axial force such that, so long as the axial load exerted on the axial thrust bearing via the synchronization element (106) is greater than a determined threshold value, each of the rolling elements (110) presents a single line (130) with two points of contact (130A, 130B) respectively with the inner ring (102) and with the first outer half-ring (114A), the second outer half-ring (114B) being spaced apart from the first by the second predetermined axial force exerted by the second pre-loading system (126), and such that the inner ring (102) is driven in rotation by said synchronization element (106), whereas, when the axial load exerted on the axial thrust bearing becomes less than this determined threshold value, a second line (132) with two additional points of contact (132A, 132B) is created between each of the rolling elements (110) and respectively the inner ring (102) and the second outer half-ring (114B) such that the axial thrust bearing is disengaged, with rotation of the inner ring (102) stopping as a result of inertia and friction internal to the thrust member via the four points of contact between each rolling element (110) and the inner ring (102) and the first and second outer half-rings (114A, 114B).

2. A disengageable axial thrust bearing according to claim 1, **characterized in that** the first and second pre-loading systems (120, 126) comprise respective resilient assemblies.

3. A disengageable axial thrust bearing according to claim 2, **characterized in that** said resilient assembly comprises one or more spring washers.

4. A disengageable axial thrust bearing according to claim 1 or claim 2, **characterized in that** the first pre-loading system exerts an axial force in the direction opposite to the axial load exerted on the axial thrust bearing via the synchronization element.

5. A disengageable axial thrust bearing according to any one of claims 1 to 4, **characterized in that** the second pre-loading system is held in position by an annular clip (128) that is positioned in respective grooves associated in each of the outer half-rings.

6. A disengageable axial thrust bearing according to any one of claims 1 to 5, **characterized in that** the outer half-ring (114A) providing the first line (130) of points of contact presents a width that is greater than the width of the other outer half-ring (114B) providing the second line (132) of points of contact.

7. A disengageable axial thrust bearing according to any one of claims 1 to 6, **characterized in that** the rolling elements (110) are balls.

8. A disengageable axial thrust bearing according to any one of claims 1 to 7, **characterized in that** the stationary thrust member forms a portion of the casing.

9. A disengageable axial thrust bearing according to any one of claims 1 to 8, **characterized in that** it includes clearance (122) localized between the first pre-loading system between the outer half-ring (114A) and the casing (116), which clearance is not zero so long as the axial load exerted on the axial thrust bearing is less than the determined threshold value.

10. The use of a disengageable axial thrust bearing according to any one of claims 1 to 9, in a cryogenic rotary machine, advantageously fitted with an active system for axial balancing under steady conditions.
